# EUROPÄISCHE PATENTSCHRIFT

(11) **EP 2 483 836 B1**
(45) Veröffentlichungstag und Bekanntmachung des Hinweises auf die Patenterteilung: **25.05.2016**
(21) Anmeldenummer: 10776537.2
(22) Anmeldetag: 24.09.2010
(51) Int. Cl.: G06K 9/42, G06K 9/00

(54) **VERFAHREN ZUR VERKEHRSZEICHENERKENNUNG**
METHOD FOR TRAFFIC SIGN RECOGNITION
PROCÉDÉ POUR LA RECONNAISSANCE DE PANNEAUX DE SIGNALISATION

(30) Priorität: 01.10.2009 DE 102009048066
(43) Veröffentlichungstag der Anmeldung: 08.08.2012
(73) Patentinhaber: Conti Temic Microelectronic GmbH, 90411 Nürnberg (DE)
(72) Erfinder: Zobel, Matthias, 88142 Wasserburg (DE)
(86) Internationale Anmeldenummer: PCT/DE2010/001123
(87) Internationale Veröffentlichungsnummer: WO 2011/038714

(56) Entgegenhaltungen:
- US-B1- 6 801 638
- YONGPING WANG ET AL: "A Method of Fast and Robust for Traffic Sign Recognition", IMAGE AND GRAPHICS, 2009. ICIG '09. FIFTH INTERNATIONAL CONFERENCE ON, IEEE, PISCATAWAY, NJ, USA, 20. September 2009 (2009-09-20), Seiten 891-895, XP031652742, ISBN: 978-1-4244-5237-8
- PRIESE L ET AL: "Ideogram identification in a realtime traffic sign recognition system", INTELLIGENT VEHICLES '95 SYMPOSIUM., PROCEEDINGS OF THE DETROIT, MI, USA 25-26 SEPT. 1995, NEW YORK, NY, USA,IEEE, US, 25. September 1995 (1995-09-25), Seiten 310-314, XP010194135, DOI: DOI:10.1109/IVS.1995.528299 ISBN: 978-0-7803-2983-6
- HOESSLER H ET AL: "Classifier training based on synthetically generated samples", PROCEEDINGS OF THE 5TH INTERNATIONAL CONFERENCE ON COMPUTER VISION SYSTEMS (ICVS 2007), APPLIED COMPUTER SCIENCE GROUP, BIELEFELD UNIVERSITY, GERMANY, 21. März 2007 (2007-03-21), Seiten 1-10, XP002510914, ISBN: 978-3-00-020933-8

## Beschreibung

Die Erfindung betrifft ein Verfahren zur Verkehrszeichenerkennung gemäß Oberbegriff des Patentanspruchs 1.

Zunehmend werden moderne Fahrerassistenzsysteme mit einem elektronischen Verkehrszeichenerkennungssystem ausgerüstet, um bspw. den Fahrer bei einer Geschwindigkeitsüberschreitung zu warnen. Hierzu nimmt eine Kamera die Umgebung vor dem Fahrzeug auf und liefert entsprechende Bilddaten an einen Bordcomputer, der mittels eines Algorithmus die Bilddaten analysiert und klassifiziert, um hieraus ein Verkehrszeichen zu identifizieren.

Ein solches Verfahren ist bspw. aus der DE 198 52 631 A1 bekannt.

Das Ziel solcher Verfahren zur Verkehrszeichenerkennung besteht darin, die Ablehnungsquote, also den Anteil der nicht oder falsch erkannter Zeichen zu minimieren. Dabei wäre von Vorteil, wenn alle Verkehrszeichen hinsichtlich ihrer Bauform einer Norm unterliegen würden, wodurch die Vielfalt unterschiedlicher Verkehrszeichen, vor allem hinsichtlich des ausländischen Straßenverkehrs, reduziert wäre. So einigten sich im Wiener Übereinkommen über Straßenverkehrszeichen mehrere europäische Länder teilweise auf eine Vereinheitlichung der Verkehrszeichen, so dass bspw. ein Tempolimit-Hinweis charakteristisch aus einem runden Schild mit rotem Außenring und einer Zahl für die Geschwindigkeitsbegrenzung bestehen soll.

Verfahren zur Verkehrszeichenerkennung arbeiten nach dem Schema, wonach in einer Detektionsphase im Kamerabild Bildregionen identifiziert werden, die potentielle Verkehrszeichen enthalten können. Diese Zeichenhypothesen werden in einem zweiten Verfahrensschritt anschließend einem Klassifikator vorgelegt, der entscheidet, ob sich in der Bildregion ein Verkehrszeichen befindet und um welches Verkehrszeichen es sich handelt.

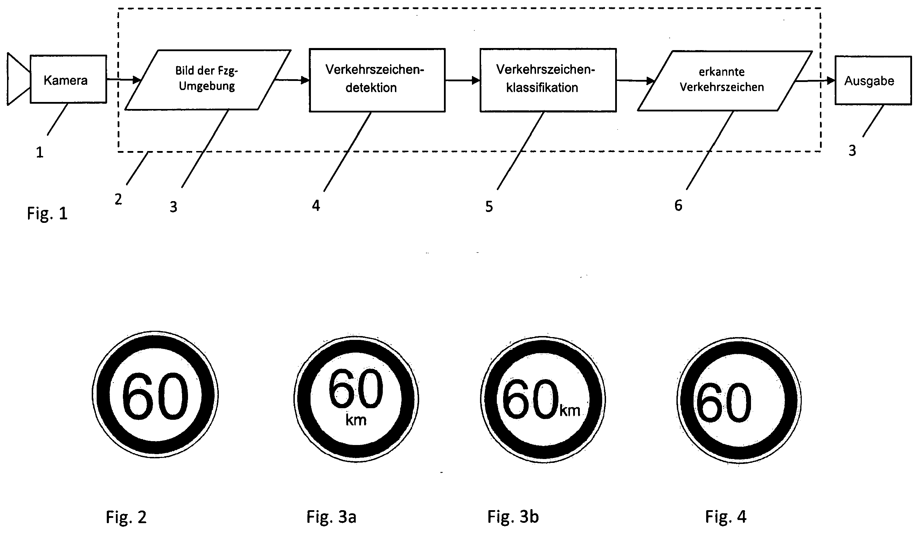

Figur 1 zeigt in einem schematischen Blockschaltbild ein rechnerbasiertes Verkehrszeichenerkennungssystem, das nach einem solchen Verfahren arbeitet. Hiernach wird mit einer Kamera 1 die Umgebung aufgenommen und die entsprechenden Bilddaten in einer Speichereinheit 3 einer Informationsverarbeitungseinheit 2 gespeichert, die zusätzlich eine Detektionseinheit 4, eine Klassifikationseinheit 5, einen Ausgabespeicher 6 und eine Ausgabeeinheit 7 umfasst. In der Detektionseinheit 4 werden diejenigen Bildregionen identifiziert, also die Zeichenhypothesen, die anschließend der Klassifikationseinheit 5 weitergeleitet werden. Die erkannten Verkehrszeichen werden in dem Ausgabespeicher 6 abgelegt und stehen dann der Ausgabeeinheit 7, bspw. einem Zentral-Display oder einer Anzeige eines Kombiinstruments zur Anzeige für den Fahrer zur Verfügung.

Der Klassifikator bzw. die Klassifikationseinheit 5 kann lernbasiert arbeiten, wie bspw. aus der DE 10 2005 062 154 A1 bekannt ist, d. h. er wird vorab über eine Menge von Lernbeispielen entsprechend trainiert, deren Ausprägungen von dem gewählten Detektionsverfahren abhängen. Bspw. ist es zur Erkennung von Geschwindigkeitsbeschränkungen bekannt, in der Detektionsphase mittels Bildverarbeitungsphasen Kreise im Kamerabild zu suchen und das umgebende Rechteck als Ausschnitt dem Klassifikator vorzulegen, wobei dieses Merkmal "Kreise" eine bestimmte Klasse von Verkehrszeichen definiert.

Ein Verfahren zur Erkennung von kreisförmigen Objekten in Bilddaten eines Bildsensors ist z. Bsp. aus der DE 10 2005 017 541 A1 bekannt.

In "A Method of Fast and Robust Traffic Sign Recognition" von Yongping Wang et al., Fifth International Conference on Image and Graphics, 2009, IEEE, Piscataway, NJ, USA, 20. September 2009, Seiten 891-895 wird ein Verfahren zur Detektion und Erkennung von Verkehrszeichen mit den Merkmalen des Oberbegriffs des Anspruchs 1 gezeigt.
Hierbei findet zur Verkehrszeichenerkennung aus Kamerabildern eine Vorverarbeitung statt, bei der einzelne potenzielle Buchstaben oder Ziffern auf einem Verkehrszeichen zunächst aus einem kontrastverbesserten Kamerabild binarisiert werden, so dass nur noch schwarze oder weiße Pixel übrigbleiben. Anschließend werden mittels eines "growing region" Verfahrens zusammenhängende schwarze Pixel als einzelne Buchstaben oder Ziffern segmentiert. Eine "character-normalization" bewirkt, dass derart segmentierte Buchstaben bzw. Ziffern einzeln auf eine vorgegebene Größe vergrößert werden.

Wie oben bereits ausgeführt sind Verkehrszeichen für Geschwindigkeitsbegrenzungen in den meisten Ländern einheitlich entsprechend der Wiener Konvention gestaltet und derart charakterisiert, dass der Ziffernblock, der den Geschwindigkeitswert anzeigt, alleine und zentriert im Verkehrszeichen eingebettet ist, wie dies in Figur 2 gezeigt ist und die üblicherweise anzutreffende Bauform darstellt.

Es gibt jedoch neben dieser vereinheitlichten Darstellung von Geschwindigkeitsbegrenzungen auch davon abweichende Zeichenausprägungen, bspw. in Österreich oder Belgien, bei denen der relevante Ziffernblock durch eine kleinere Textangabe, z. Bsp. "km" ergänzt ist, wie die Darstellungen gemäß Figur 3 zeigen, oder der relevante Ziffernblock gemäß Figur 4 außermittig angeordnet ist, oft mit der Folge, dass auch die Größe des Ziffernblocks eine andere, zumeist kleinere Größe im Vergleich zu der vereinheitlichten Bauform gemäß Figur 2 aufweist. Manchmal entsteht ein Verkehrszeichen gemäß Figur 4 auch als Folge eines Überklebens oder Übermalens eines vorhandenen Textzusatzes auf dem Verkehrszeichen.

Für einen Klassifikator, der lernbasiert arbeitet, bedeutet dies, dass für diese Abweichungen von der üblicherweise benutzten Bauform für eine Geschwindigkeitsbegrenzung, bei der der Ziffernblock zentral im Zeichen angeordnet ist, die Variabilität stark zunimmt, da für diese Variationen ebenfalls Lern- bzw. Trainingsbeispiele erzeugt und zur Verfügung gestellt werden müssen. Ferner wird aufgrund der erhöhten Variabilität ein solcher Klassifikator mehr Zeichenhypothesen passieren lassen, wodurch die Gefahr besteht, dass sich die Falschalarm-Rate (False Positives) erhöht.

Aufgabe der Erfindung ist es daher, ein Verfahren zur Verkehrszeichenerkennung der eingangs genannten Art anzugeben, bei dem die Anzahl der erforderlichen Variationen an Lern-und Trainingsbeispielen für den Klassifikator beschränkt ist, jedoch ohne dass die Erkennungsrate sinkt oder die Echtzeitanforderung in Gefahr sind.

Diese Aufgabe wird gelöst durch ein Verfahren mit den Merkmalen des Patentanspruchs 1.

Bei diesem Verfahren, bei welchem die Bilddaten eines Sensors in einer Informationsverarbeitungseinheit analysiert und klassifiziert werden, wobei
- in einem ersten Verfahrensschritt auf der Grundlage der Ergebnisse einer Analyse wenigstens ein Bildausschnitt ermittelt wird, der mit hinreichender Wahrscheinlichkeit ein Objekt enthält, das ein Verkehrszeichen einer bestimmten Klasse von Verkehrszeichen ist, und
- in einem zweiten Verfahrensschritt dieser Bildausschnitt einem Klassifikator zugeführt wird, der auf der Basis des ausgewählten Bildausschnittes mittels eines lernbasierten Algorithmus ein Verkehrszeichen aus der bestimmten Klasse erkennt,
   wird erfindungsgemäß
- im ersten Verfahrensschritt ein klassenspezifisches Merkmal in dem Bildausschnitt identifiziert,
- ein modifizierter Bildausschnitt mit dem klassenspezifischen Merkmal in dessen Bildzentrum erzeugt, wobei die durch das Verschieben des klassenspezifischen Merkmals in das Bildzentrum entstehenden Bildbereiche mit geeigneten Bildpunkten aufgefüllt werden, und
- der modifizierte Bildausschnitt dem Klassifikator zugeführt.

Wenn nun ein klassenspezifisches Merkmal einer bestimmten Klasse von Verkehrszeichen, bspw. der Klasse der runden Verkehrszeichen mit Geschwindigkeitsbegrenzungen von der vereinheitlichten Norm abweicht, also wenn bspw. bei solchen Verkehrszeichen für eine Geschwindigkeitsbegrenzung der Zeichenblock nicht mittig im Verkehrszeichen angeordnet ist, wird der Bildausschnitt, bevor dieser dem Klassifikator zugeführt wird, dahingehend modifiziert, dass das klassenspezifische Merkmal, also dieser Ziffernblock in das Bildzentrum des Bildausschnittes verschoben wird. Anhand dieses modifizierten Bildausschnittes führt der Klassifikator die Klassifikation durch. Damit braucht der Klassifikator nur noch auf Verkehrszeichen trainiert werden, die das klassenspezifische Merkmal im Zentrum des vorgelegten Bildausschnittes aufweisen, wodurch die Variation der zum Training des Klassifikators erforderlichen Lernbeispiele geringer ausfällt und damit auch die Menge an bereitzustellenden Trainingsbeispielen reduziert werden kann.

Durch diese Einschränkung, dass also der Klassifikator nur noch klassenspezifische Merkmale klassifizieren muss, die im Zentrum des zu verarbeitenden Bildausschnittes liegen und deshalb auch die Anzahl der Trainingsbeispiele reduziert ist, kann das Klassifikationsverfahren robust gestaltet werden.

Bei einer besonders vorteilhaften Weiterbildung der Erfindung wird der modifizierte Bildausschnitt dadurch erzeugt, dass das klassenspezifische Merkmal in die Repräsentation eines in einer Datenbank gespeicherten Verkehrszeichens der bestimmten Klasse von Verkehrszeichen eingesetzt wird. Dies bedeutet, dass anstelle des realen Bildausschnittes ein künstliches Verkehrszeichen der bestimmten Klasse, das jedoch das klassenspezifische Merkmal nicht aufweist und in einer Datenbank gespeichert ist, verwendet wird und in das das zu klassifizierende klassenspezifische Merkmal eingesetzt wird. Der in dieser Weise erzeugte modifizierte Bildausschnitt wird anschließend zur Klassifikation dem Klassifikator vorgelegt. Auch damit lässt sich die Variabilität der Trainingsbeispiel vorteilhaft reduzieren, mit der Folge dass die Erkennungsrate steigt.

Gemäß einer vorteilhaften Weiterbildung der Erfindung kann nicht nur eine Lagenormierung hinsichtlich des klassenspezifischen Merkmals vorgenommen werden, sondern zusätzlich auch eine Größennormierung, indem in dem modifizierten Bildausschnitt das klassenspezifische Merkmal auf eine vorgegebene Bildgröße gesetzt wird. Somit kann durch diese Maßnahme die Anzahl der bereitzustellenden Trainingsbeispiele für den Klassifikator nochmals reduziert werden, wodurch eine weitere Verbesserung der Robustheit des Klassifikationsverfahrens erzielbar ist.

Bei einer bevorzugten Weiterbildung der Erfindung wird eine Lage- und/oder Größennormierung nur durchgeführt, wenn der zu verarbeitende Bildausschnitt eine bestimmte Größe aufweist. Somit kann verhindert werden, dass Objekte mit einer dem klassenspezifischen Merkmal ähnlichen Struktur als mögliches Verkehrszeichen identifiziert werden oder Objekte, die zu weit vom Fahrzeug entfernt sind oder einer benachbarten Fahrspur zugeordnet sind aussortiert werden.

Ferner wird in vorteilhafter Weise bei einer weiteren Fortbildung des erfindungsgemäßen Verfahrens ein modifizierter Bildausschnitt nur dann erzeugt, wenn wenigstens eine Klassifikation der Bilddaten, vorzugsweise eine vorgegebene Anzahl von Bildzyklen erfolglos ist. Dies führt zu vorteilhaftem Verhalten des Klassifikationsverfahrens hinsichtlich der Echtzeitanforderungen an das Erkennungsverfahren.

Besonders vorteilhaft ist es hinsichtlich des Klassifikationsverfahrens, wenn die durch das Verschieben des klassenspezifischen Merkmals in das Bildzentrum entstehenden Bildbereiche mit Bildpunkten entsprechend den Bildpunkten der Umgebung des klassenspezifischen Merkmals aufgefüllt werden. Dies führt zu einer Erhöhung der Erkennungsrate. Vorzugsweise können diese Bildbereiche auch mit Bildpunkten einer bestimmten Farbe aufgefüllt werden, mit Bildpunkten, die aus den Bildpunkten der Umgebung des modifizierten Bildausschnittes berechnet werden, z. Bsp. als Mittelwert hinsichtlich einer mittleren Helligkeit oder als konstante Farbe, z. Bsp. der Hintergrundfarbe des Verkehrsschildes mit dem Ziel, eine Darstellung für den Klassifikator zu erreichen, die den Trainingsbeispielen entspricht.

Besonders vorteilhaft lässt sich das erfindungsgemäße Verfahren auf eine Klasse von kreisrunden Verkehrszeichen anwenden, und innerhalb dieser Verkehrszeichenklasse auf solche Verkehrszeichen mit einem Ziffernblock, also bspw. Verkehrszeichen mit Geschwindigkeitsbegrenzungen.

Die Erfindung wird nachfolgend unter Bezugnahme auf die Zeichnungen näher erläutert. Es zeigen:
- Fig. 1: ein schematisches Blockschaltbild einer Schaltungsanordnung zur Erläuterung eines bekannten Verkehrszeichenerkennungsverfahrens,
- Fig. 2: eine Darstellung eines gemäß der Wiener Konvention normierten Verkehrszeichens mit einer Geschwindigkeitsbegrenzung,
- Fig. 3: Darstellung von Verkehrszeichen, die von der Bauform gemäß des Verkehrszeichens nach Figur 2 abweichen,
- Fig. 4: eine weitere Darstellung eines Verkehrszeichens mit von der Bauform gemäß des Verkehrszeichens nach Figur 2 abweichender Bauform,
- Fig. 5: ein schematisches Blockschaltbild einer Schaltungsanordnung zur Erläuterung des erfindungsgemäßen Verkehrszeichenerkennungsverfahrens,
- Fig. 6: Darstellungen eines Verkehrszeichens zur Erläuterung des erfindungsgemäßen Verkehrszeichenerkennungsverfahrens, und
- Fig. 7: eine weitere Darstellung eines Verkehrszeichens zur Erläuterung des erfindungsgemäßen Verkehrszeichenerkennungsverfahrens.

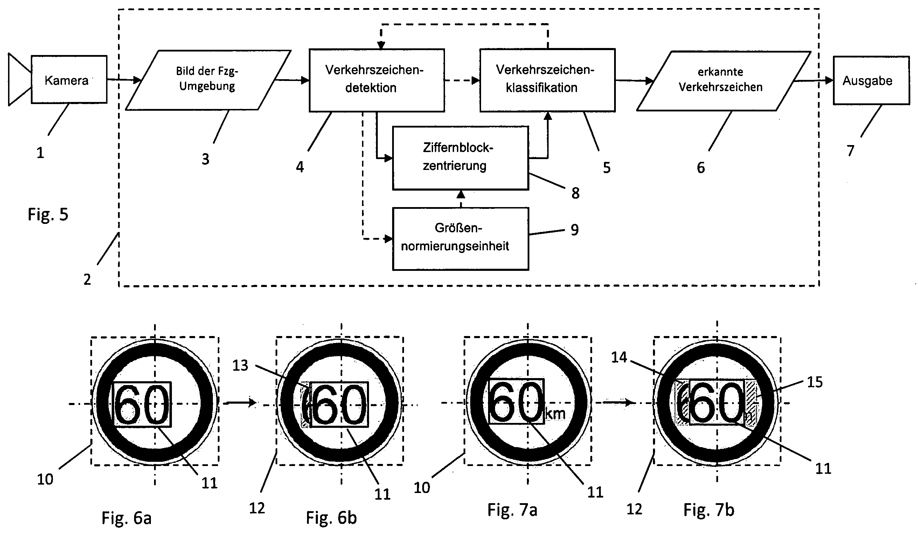

Das Blockschaltbild einer Schaltungsanordnung gemäß Figur 5 entspricht in seinem strukturellen Aufbau demjenigen nach Figur 1. Gegenüber dieser Schaltungsanordnung nach Figur 1 weist die Schaltungsanordnung nach Figur 5 neben der Kamera 1, der Speichereinheit 3, der Detektionseinheit 4, der Klassifikationseinheit 5, dem Ausgabespeicher 6 und der Ausgabeeinheit 7 zusätzlich erfindungsgemäß eine Zentrierungseinheit 8 auf, wobei die Zentrierungseinheit 8 noch durch eine Größennormierungseinheit 9 ergänzt werden kann.

Die von der Kamera 1 aufgenommenen Bilddaten von Bildzyklen werden in der Speichereinheit 3 gespeichert und der Detektionseinheit 4 zur Detektion von relevanten Bildausschnitten zugeführt. Relevante Bildausschnitte sind solche Bilddaten, die mit hinreichender Wahrscheinlichkeit ein Verkehrszeichen einer bestimmten Klasse enthalten, bspw. ein kreisrundes Verkehrszeichen. Weiterhin wird für diese bestimmte Klasse von Verkehrszeichen ein klassenspezifisches Merkmal detektiert, das bspw. ein Ziffernblock eines Geschwindigkeitsbeschränkungs-Verkehrszeichens sein kann.

Figur 6a zeigt einen solchen relevanten Bildausschnitt 10, der ein kreisrundes Verkehrszeichen mit einem Ziffernblock 11 als klassenspezifisches Merkmal enthält, wobei dieser Ziffernblock 11 eine Geschwindigkeitsbegrenzung von "60" anzeigt. Dieser Ziffernblock 11 liegt außerhalb des Zentrums des Bildausschnittes 10, wie anhand des in Figur 6a eingezeichneten Fadenkreuzes zu erkennen ist.

Dieser Bildausschnitt 10 gemäß Figur 6a wird im nächsten Verfahrensschritt an die Zentrierungseinheit 8 weitergeleitet, die aus diesem Bildausschnitt 10 einen modifizierten Bildausschnitt 12 erzeugt, der in Figur 6b dargestellt ist. Hierbei wird der Ziffernblock 11 im Zentrum des Bildausschnittes 10 erzeugt, so dass ein modifizierter Bildausschnitt 12 gemäß Figur 6b entsteht, wobei die Zentrierung des Ziffernblocks 11 anhand des eingezeichneten Fadenkreuzes eindeutig erkennbar ist. Durch das Erzeugen bzw. Verschieben des Ziffernblocks 11 in das Zentrum des Bildausschnitts 12, entsteht ein Bildbereich 13 der ursprünglichen Lage des Ziffernblocks 11, der einen Teil der Struktur der Ziffer "6" des Ziffernblocks 11 zeigt. Dieser Bildbereich 13 wird ersetzt bzw. mit geeigneten Bildpunkten überschrieben. So kann bspw. dieser Bildbereich 13 mit Bildpunkten entsprechend den Bildpunkten der Umgebung des Ziffernblocks 11 ersetzt werden, oder auch mit Bildpunkten einer bestimmten Farbe, oder mit Bildpunkten, die dem Mittelwert der Bildpunkte des modifizierten Bildausschnittes 12 entsprechen. Ferner besteht die Möglichkeit den Bildbereich 13 mit Bildpunkten entsprechend dem Hintergrund des Bildausschnittes 10 aufzufüllen.

Das mit dem modifizierten Bildausschnitt 12 erzeugte Bild entspricht damit dem normierten Verkehrszeichen gemäß Figur 2.

Der modifizierte Bildausschnitt 12 wird nun der Klassifikationseinheit 5 zugeführt, die das Verkehrszeichen gemäß Figur 2 mit der Geschwindigkeitsangabe "60" aus dem Bildausschnitt 12 identifiziert und in den Ausgangsspeicher 6 abgelegt. Von dort kann es für den Fahrer bspw. als aktuell zulässige Höchstgeschwindigkeit im Kombiinstrument seines Fahrzeugs angezeigt werden.

Ein weiteres Beispiel zur Erkennung eines Verkehrszeichens mit dem erfindungsgemäßen Verfahren wird anhand der Figuren 7a und 7b erläutert. Hiernach wird gemäß Figur 7a ein Bildausschnitt 10 detektiert, der neben einem Ziffernblock 11 als klassenspezifisches Merkmal auch einen Zusatz "km" enthält. Auch in diesem Bildausschnitt 10 liegt der Ziffernblock 11 außerhalb der Bildmitte, was wiederum anhand des gezeichneten Fadenkreuzes erkennbar ist.

Bevor dieser Bildausschnitt 10 klassifiziert wird, erfolgt mittels der Zentrierungseinheit 8, wie bereits im Zusammenhang mit der Beschreibung der Figuren 6 erläutert wurde, eine Zentrierung dieses Ziffernblocks 11 in das Zentrum des Bildausschnittes 10, so dass ein modifizierter Bildausschnitt 12 gemäß Figur 7b entsteht.

Auch entstehen bei der Erzeugung dieses modifizierten Bildausschnittes 12 mit der zentralen Anordnung des Ziffernblocks 11 Bildbereiche 14 und 15 aus der ursprünglichen Lage des Ziffernblocks 11 in dem Bildausschnitt 10, die einen Teil der Struktur der Ziffer "6" des Ziffernblocks 11 bzw. einen Teil der Struktur des Zusatzes "km" zeigen. Entsprechend wie in dem letzten Beispiel i. Z. mit der Figur 6b beschrieben, werden diese Bildbereiche 14 und 15 mit geeigneten Bildpunkten ersetzt bzw. überschrieben, so dass die Klassifikationseinheit 5 eine Identifikation eines Verkehrszeichens anhand eines modifizierten Bildausschnittes 12 durchführen kann, das der normierten Bauform eines Verkehrszeichens gemäß Figur 2 entspricht.

Der modifizierte Bildausschnitt 12 kann auch derart erzeugt werden, dass hierzu in einem Datenspeicher der Detektionseinheit 4 abgelegte künstliche Verkehrszeichen der bestimmten Klasse verwendet werden, die jedoch das klassenspezifische Merkmal nicht aufweisen. Eine Repräsentation eines solchen Verkehrszeichens entspricht einem wie in Figur 2 dargestellten runden Verkehrszeichen mit rotem Rand, jedoch ohne den Ziffernblock mit der Geschwindigkeitsangabe "60". Der von der Detektionseinheit 4 aus dem realen Bildausschnitt 10 detektierte Ziffernblock 11 wird in ein solches künstliches Verkehrszeichen eingesetzt und als modifizierter Bildausschnitt 12 der Klassifikationseinheit 5 weitergeleitet.

Neben der Lagenormierung eines Ziffernblocks 11 in einem Bildausschnitt 10 kann auch zusätzlich eine Größennormierung des erkannten Ziffernblocks 11 durchgeführt werden. Hierzu zeigt die Schaltungsanordnung gemäß Figur 5 zusätzlich eine Größennormierungseinheit 9, der zunächst ein Bildausschnitt 10 zugeführt wird, um den darin erkannten Ziffernblock 11 hinsichtlich dessen Größe auf ein vorgegebenes Maß zu ändern, also zu normieren. Der derart modifizierte Bildausschnitt wird jetzt der Zentrierungseinheit 8 zugeführt, damit aus dem vor der Größennormierungseinheit 9 modifizierten Bildausschnitt ein weiter modifizierter Bildausschnitt 12 gemäß Figur 6b oder 7b mit zentriertem Ziffernblock 11 erzeugt wird.

Auch kann das erfindungsgemäße Verkehrszeichenerkennungsverfahren dahingehend modifiziert werden, dass vor der Zentrierung und/oder Größennormierung bestimmte Bedingungen hinsichtlich des Bildausschnittes 10 erfüllt sein müssen.

So kann zunächst eine Klassifikation des Bildausschnittes 10 durch die Klassifikationseinheit 5 durchgeführt werden, also zunächst der in der Detektionseinheit 4 erzeugte Bildausschnitt 10 der Klassifikationseinheit 5 zugeführt werden, und erst, wenn nach einer bestimmten Anzahl von Bildzyklen eine erfolgreiche Klassifikation nicht durchgeführt werden kann, wird dieser Bildausschnitt 10 zurück zur Detektionseinheit 4 und dann der Zentrierungseinheit 8 oder der Größennormierungseinheit 9 zugeführt.

Des Weiteren kann eine solche Bedingung auch darin bestehen, dass Bildausschnitte 10 eine bestimmte Größe aufweisen müssen. Damit werden Objekte aussortiert, die entweder zu weit vom Fahrzeug entfernt sind, kein Verkehrszeichen darstellen oder Verkehrszeichen von benachbarten Fahrspuren sind.

### Bezugszeichen

- 1: Kamera
- 2: Informationsverarbeitungseinheit
- 3: Speichereinheit für Bilddaten
- 4: Detektionseinheit
- 5: Klassifikationseinheit
- 6: Ausgabespeicher
- 7: Ausgabeeinheit
- 8: Zentrierungseinheit
- 9: Größennormierungseinheit
- 10: Bildausschnitt
- 11: klassenspezifisches Merkmal, Ziffernblock
- 12: modifizierter Bildausschnitt
- 13: Bildbereich
- 14: Bildbereich
- 15: Bildbereich

## Patentansprüche

1. Verfahren zur Verkehrszeichenerkennung, welches die Bilddaten eines Sensors (1) in einer Informationsverarbeitungseinheit analysiert und klassifiziert, wobei
- in einem ersten Verfahrensschritt auf der Grundlage der Ergebnisse einer Analyse wenigstens ein Bildausschnitt (10) ermittelt wird, der mit hinreichender Wahrscheinlichkeit ein Objekt enthält, das ein Verkehrszeichen einer bestimmten Klasse von Verkehrszeichen ist, und ein klassenspezifisches Merkmal (11) in dem Bildausschnitt (10) identifiziert wird,
**dadurch gekennzeichnet, dass**
- der Bildausschnitt (10) dahingehend modifiziert wird, dass das klassenspezifische Merkmal (11) in das Bildzentrum des Bildausschnitts (10) verschoben wird, wobei die durch das Verschieben des klassenspezifischen Merkmals (11) in das Bildzentrum entstehenden Bildbereiche (13, 14, 15) mit geeigneten Bildpunkten aufgefüllt werden, und
- der modifizierte Bildausschnitt (12) in einem zweiten Verfahrensschritt einem Klassifikator (5) zugeführt wird, der auf der Basis des ausgewählten Bildausschnittes (10) mittels eines lernbasierten Algorithmus ein Verkehrszeichen aus der bestimmten Klasse erkennt.

2. Verfahren nach Anspruch 1,
**dadurch gekennzeichnet, dass**
in dem modifizierten Bildausschnitt (12) das klassenspezifische Merkmal (11) auf eine vorgegebene Bildgröße gesetzt.

3. Verfahren nach Anspruch 1 oder 2,
**dadurch gekennzeichnet, dass**
ein modifizierter Bildausschnitt (12) nur dann erzeugt wird, wenn der Bildausschnitt (10) ein vorgegebene Größe aufweist.

4. Verfahren nach einem der vorhergehenden Ansprüche,
**dadurch gekennzeichnet, dass**
ein modifizierter Bildausschnitt (12) nur dann erzeugt wird, wenn wenigstens eine Klassifikation der Bilddaten erfolglos ist.

5. Verfahren nach einem der vorhergehenden Ansprüche,
**dadurch gekennzeichnet, dass**
die durch das Verschieben des klassenspezifischen Merkmals (11) in das Bildzentrum entstehenden Bildbereiche (13, 14, 15) mit Bildpunkten entsprechend den Bildpunkten der Umgebung des klassenspezifischen Merkmals (11) aufgefüllt werden.

6. Verfahren nach einem der vorhergehenden Ansprüche 1 bis 3,
**dadurch gekennzeichnet, dass**
die durch das Verschieben des klassenspezifischen Merkmals (11) in das Bildzentrum entstehenden Bildbereiche (13, 14, 15) mit Bildpunkten aufgefüllt werden, die aus den Bildpunkten der Umgebung des klassenspezifischen Merkmals (11) berechnet werden.

7. Verfahren nach einem der vorhergehenden Ansprüche,
**dadurch gekennzeichnet, dass**
die bestimmte Klasse von Verkehrszeichen kreisrunde Verkehrszeichen umfasst.

8. Verfahren nach einem der vorhergehenden Ansprüche,
**dadurch gekennzeichnet, dass**
die bestimmte Verkehrszeichenklasse Verkehrszeichen mit einem Ziffernblock umfassen.

## Claims

1. A method of traffic sign recognition which analyzes and classifies image data provided by a sensor (1) in an information processing unit, wherein
- at least one image detail (10) that sufficiently probably contains an object that is a traffic sign belonging to a particular class of traffic signs is determined on the basis of the results of an analysis in a first procedure step, and a class-specific feature (11) is identified in the image detail (10),
**characterized in that**
- the image detail (10) is modified to the effect that the class-specific feature (11) is shifted to the image center of the image detail (10), wherein the image regions (13, 14, 15) created by shifting the class-specific feature (11) to the image center are padded with suitable pixels, and
- the modified image detail (12) is submitted, in a second procedure step, to a classificatory (5) that recognizes a traffic sign belonging to the particular class on the basis of the selected image detail (10) by means of a learning-based algorithm.

2. The method according to Claim 1,
**characterized in that**
the class-specific feature (11) is set to a predetermined image size in the modified image detail (12).

3. The method according to Claim 1 or 2,
**characterized in that**
a modified image detail (12) is generated only if the image detail (10) has a predetermined size.

4. The method according to any one of the preceding claims,
**characterized in that**
a modified image detail (12) is generated only if at least one classification of the image data is unsuccessful.

5. The method according to any one of the preceding claims,
**characterized in that**
the image regions (13, 14, 15) created by shifting the class-specific feature (11) to the image center are padded with pixels corresponding to pixels of surroundings of the class-specific feature (11).

6. The method according to any one of the preceding Claims 1 to 3,
**characterized in that**
the image regions (13, 14, 15) created by shifting the class-specific feature (11) to the image center are padded with pixels calculated from pixels of surroundings of the class-specific feature (11).

7. The method according to any one of the preceding claims,
**characterized in that**
the particular class of traffic signs comprises circular traffic signs.

8. The method according to any one of the preceding claims,
**characterized in that**
the particular class of traffic signs comprises traffic signs with a numerical block.

## Revendications

1. Procédé de reconnaissance de signaux routiers, lequel analyse et classe les données d'image d'un capteur (1) dans une unité de traitement d'informations,
- au moins un segment d'image (10) étant déterminé dans une première étape de procédé sur la base des résultats d'une analyse, le segment d'image contenant avec une probabilité suffisante un objet qui est un signal routier d'une classe déterminée de signaux routiers, et une caractéristique (11) spécifique à une classe étant identifiée dans le segment d'image (10),
**caractérisé en ce que**
- le segment d'image (10) est modifié en ce sens que la caractéristique (11) spécifique à une classe est déplacée au centre de l'image du segment d'image (10), les zones d'image (13, 14, 15) résultant du déplacement de la caractéristique (11) spécifique à une classe au centre de l'image étant remplies avec des points d'image appropriés, et
- le segment d'image (12) modifié est, dans une deuxième étape de procédé, acheminé à un classificateur (5) qui, sur la base du segment d'image (10) sélectionné, reconnait un signal routier de la classe déterminée au moyen d'un algorithme basé sur l'apprentissage.

2. Procédé selon la revendication 1,
**caractérisé en ce que**,
dans le segment d'image (12) modifié, la caractéristique (11) spécifique à une classe (11) est réglée à une grandeur d'image prédéfinie.

3. Procédé selon la revendication 1 ou 2,
**caractérisé en ce**
**qu'**un segment d'image (12) modifié n'est produit que lorsque le segment d'image (10) présente une grandeur d'image prédéfinie.

4. Procédé selon l'une des revendications précédentes,
**caractérisé en ce**
**qu'**un segment d'image (12) modifié n'est produit que lorsque au moins une classification des données d'image échoue.

5. Procédé selon l'une des revendications précédentes,
**caractérisé en ce que**
les zones d'image (13, 14, 15) résultant du déplacement de la caractéristique (11) spécifique à une classe au centre de l'image sont remplies avec des points d'image d'une façon correspondant aux points d'image de l'environnement de la caractéristique (11) spécifique à une classe.

6. Procédé selon l'une des revendications précédentes 1 à 3,
**caractérisé en ce que**
les zones d'image (13, 14, 15) résultant du déplacement de la caractéristique (11) spécifique à une classe au centre de l'image sont remplies avec des points d'image qui sont calculés à partir des points d'image de l'environnement de la caractéristique (11) spécifique à une classe.

7. Procédé selon l'une des revendications précédentes,
**caractérisé en ce que**
la classe déterminée de signaux routiers comprend des signaux routiers en forme de cercle.

8. Procédé selon l'une des revendications précédentes,
**caractérisé en ce que**
la classe définie de signaux routiers comprend des signaux routiers avec un ensemble de chiffres.
